# EUROPEAN PATENT SPECIFICATION

(11) **EP 0 962 076 B1**
(45) Date of publication and mention of the grant of the patent: **28.12.2005**
(21) Application number: 98957095.7
(22) Date of filing: 14.12.1998
(51) Int. Cl.: H04L 12/28, H04Q 7/20, G06F 13/12

(54) **A WIRELESS UNIVERSAL BUILDING INFORMATION INFRASTRUCTURE**
UNIVERSELLE DRAHTLOSE INFORMATIONSINFRASTRUKTUR FÜR GEBÄUDE
INFRASTRUCTURE D'INFORMATION UNIVERSELLE ET SANS FIL POUR IMMEUBLE

(30) Priority: 31.12.1997 US 2559
(43) Date of publication of application: 08.12.1999
(73) Proprietor: Koninklijke Philips Electronics N.V., 5621 BA Eindhoven (NL)
(72) Inventor: MUKHERJEE, Satyendranath, NL-5656 AA Eindhoven (NL); BRYAN, David, NL-5656 AA Eindhoven (NL); HULYALKAR, Samir, NL-5656 AA Eindhoven (NL); GHOSH, Monisha, NL-5656 AA Eindhoven (NL); SATYANARAYANA, Srinagesh, NL-5656 AA Eindhoven (NL); MELNIK, George, NL-5656 AA Eindhoven (NL); LETAVIC, Theodore, NL-5656 AA Eindhoven (NL); DASGUPTA, Aninda, NL-5656 AA Eindhoven (NL)
(74) Representative: Deguelle, Wilhelmus H. G.
(86) International application number: PCT/IB1998/002037
(87) International publication number: WO 1999/035788

(56) References cited:
- EP-A2- 0 782 297
- EP-A2- 0 877 499
- WO-A1-94/09595
- US-A- 5 537 399
- US-A- 5 717 737

## Description

### FIELD OF THE INVENTION

The present invention relates to wireless communication systems, and more particularly, a wireless universal building information infrastructure.

### BACKGROUND OF THE INVENTION

Intra-building communications usually comprise several heterogeneous, often proprietary, external networks such as, for instance, satellite networks, broadcast television networks, cable television networks, co-axial networks, telephone networks, utility company networks, and wireless networks. These external networks have their own standards and protocols with respect to the format of data. Television broadcasts, for instance, can transmit in NTSC, PAL, HDTV, and SDTV formats. Cable television comprises broadcast, switched, FO, digital, and analog networks. Telephone companies utilize POTS, ADSL, BISDN, ISDN, and SDH among others. There are several wireless standards such as PCS, GSM, CDMA, CDPD, TDMA, Ardis/RAM, and more. In addition to external networks, intra-building internal networks such as a local area computer network (LAN) or an internal phone system are often employed. The point being that there are a large number of information exchange and tele-communication mediums each having one or more data standard(s) or protocol(s).

Residential and/or commercial buildings will utilize several, if not all, of these mediums in any given day. Currently, the infrastructure of the variety of external public network media and data formats or protocols cannot be extended throughout an entire building due to cost constraints. Additionally, not every vendor with a device or application for use inside a building can be expected to install and be compatible with a proprietary intra-building network.

Moreover, information exchange and tele-communication within a building is achieved primarily through hardwired power-line cable systems. Relaying communication signals across different power-line phases and over transformers is difficult and expensive in commercial buildings. Further, power-line communication is very noisy. Another method of intra-building information exchange and tele-communcation uses wireless systems to communicate in the Infrared spectrum (IR). Such infrared systems, however, cannot easily penetrate and communicate through walls and steel structures. Other systems use wireless radio communication.

The wireless universal building information infrastructure (WUBII) of the present invention creates an efficient, lower cost solution to intra-building coordination of telecommunication and information exchange. The WUBII is essentially a centrally located node that accepts input from a variety of external and internal netwok systems. This node is connected to a second unit that converts the received information into a standard protocol before sending same out to any one or more of the multiple wireless networks situated throughout the building and ultimately to the application that has requested the data. The central node is an open, standardized and central connection point for the external and internal networks. The specifications of the central node would be published so that software engineers could design compatible applications. Further, the WUBII uses radio-frequency (RF) wireless communications as opposed to infra-red (IR). The power level of the transmitters is maintained to abide by FCC regulations. Moreover, the cost of the WUBII can be spread among the many applications that use it.

### DESCRIPTION OF RELATED ART

The present invention has the flexibility to integrate low-to-high bandwidth networks that exchange audio, video, control, and other information. The WUBII also utilizes RF wireless transmission and reception to cut down on the amount of physical cabling required to exhange data. The prior art is typically limited to various different subsets of the WUBII's capabilities and does not attain the breadth and scope of the WUBII's capabilities.

WO-A-94/09595 discloses a controller apparatus and method allowing multimedia articles and multiple incompatible video coding equipment employing different video coding algorithms to freely communicate with each other.

US-A-5 537 399 discloses a local area network comprising a plurality of network interfaces which are each coupled to a station. The network interfaces are provided for exchanging data with each other by e.g. a wireless type of radio communication. Data calls containing e.g. telephone, video or sound signals are transmitted in the network.

WO 95/01070 (1994) entitled "Multinetwork Terminal" from Ericsson discusses radio and non-radio networks which can be linked for providing communication flexibility. This primarily relates to telephone type data. It does not address the issue of handling data of different types (i.e. video, control, audio, computer etc.) at the same time.

EPA 669 773 A2 (1995) entitled in German "Kommunikationssystem mit einer Personalcomputern un drahtlosen Fernsprechsystemen verbindenen Kommunikationsanlage" from Siemens discloses communication between a PC, SLMC and a KE.

GB 2279852 (1994) entitled "Information Transmission System" from Diehl GmbH & Co is focused on communicating with a vehicle to download and upload information from a PC. Only low speed data (i.e. < 20 Kbps) is handled.

Lastly, EPA 663 785 A2 (1995) entitled "Method of Data Transfer and Data Interface Unit" from Nokia addresses a radio telephone network, for exchanging information between a mobile unit and a wired LAN.

### SUMMARY

A wireless universal building information infrastructure (WUBII) is disclosed for allowing standardized plug-and-play interactions and interfaces inside a building between (i) a system delivering information (Internal and External Networks), (ii) the delivered information, and, (iii) the devices or applications that will consume the delivered information. The wireless universal building information infrastructure generally comprises an information distribution infrastructure and communication network situated inside the building, wherein said information distribution infrastructure and communication network comprise open environments and systems using multiple types of wireless networks that are appropriate to the applications or devices that need to communicate via the networks within the building.
The present system uses wireless networks and allows wireless transfer of video, audio, control, and computer, etc. information. Radio frequency (RF) wireless communication is used for performance, ease of interconnection, and relocate-ability. The WUBII focuses on interfacing among various types of networks and devices used in commercial buildings and residential homes.

### BRIEF DESCRIPTION OF THE DRAWINGS

The present invention can be better understood with reference to the following figures in which like numerals shall represent like elements in the various figures.

FIG. I illustrates a Public Network Interface Unit component of the Wireless Universal Building Information Infrastructure (WUBII).

FIG. 2 illustrates an RF Access Unit component of the Wireless Universal Building Information Infrastructure (WUBII).

FIG. 3 illustrates a typical office building having multiple intra-building wireless networks situated throughout.

### DETAILED DESCRIPTION OF THE INVENTION

The present invention shall now be described with reference to the accompanying figures wherein like numerals shall represent like elements in the various figures.

Occupants of both commercial and residential buildings increasingly require data for applications that they use either professionally or personally. Examples include video and audio distribution inside homes, intra-building electronic messaging and paging, data communication among departments, remote control of lighting and appliances, and more. Further, there are many applications in building automation and control, appliance control and building security that require data to be exchanged among networks and devices within a building.

Data is often provided by external agencies, network operators and/or service providers. Examples include utility companies, cable television system operators, phone companies, financial institutions, on-line information services, and others. Delivered data must frequently be distributed to multiple points inside a building, or must be made available at a single point of consumption in the building.

Data may be delivered to a building via a variety of devices or media, such as, but not limited to, fiber optic cable, coaxial cable, twisted pair cable, or by wireless communication using terrestrial or satellite links. It is not cost effective, however, to extend the different external networks throughout a building. Moreover, data is delivered in a variety of formats and/or communication protocols. Applications and/or devices running inside a building cannot be expected to be compatible with every type of delivery device or media, and their associated formats and protocols.

The present invention describes a wireless universal building information infrastructure (WUBII) that allows standardized plug-and-play interactions and interfaces among external systems carryine data, the data itself, and devices or applications that consume the data. Inside the building the WUBII uses multiple wireless networks appropriate to the applications or devices that need to communicate using the networks.

The Wireless Universal Building Information Infrastructure (WUBII) described herein provides an open, standardized interface for any Wide Area or Metropolitan Area Network (WAN/MAN) for connecting to an intra-building wireless communication infrastructure allowing information/data from service and content providers to be delivered to the building via the WAN/MAN. In addition to distributing data to specific points within the building where such data will be utilized, the WUBII also provides an open, standardized communication protocol for any software or system developer's communication nodes to connect to the intra-building wireless network and exchange data via the WAN/MAN. Moreover, the WUBII will link with any Local Area Network (LAN) within the building thereby allowing local applications to communicate and exchange data as well.

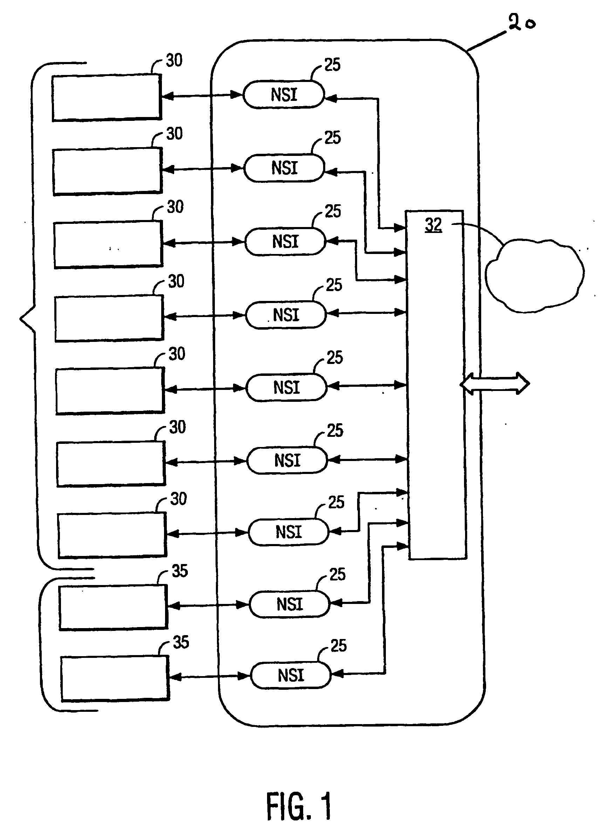

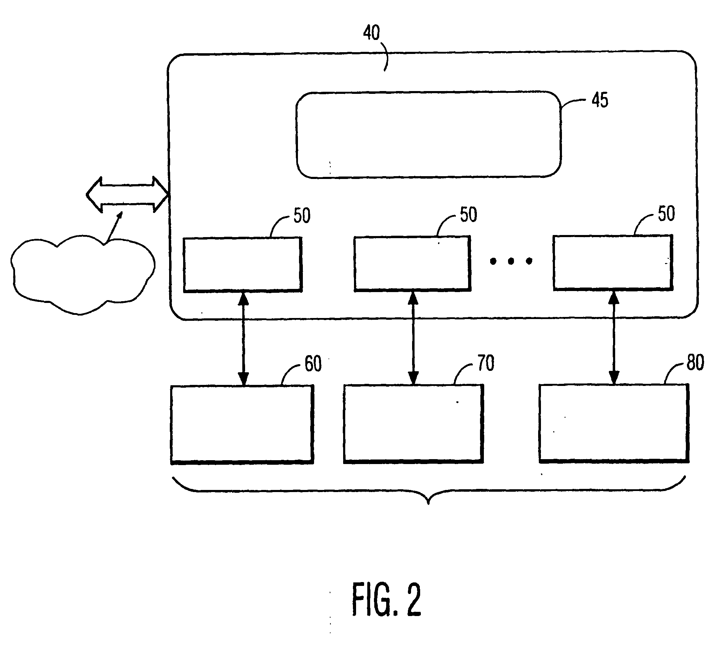

Referring to FIG. 1, the WUBII is a modular, radio frequency (RF) network and can connect to any external network 30 via interfaces in a Public Network Interface Unit (PNIU) 20. Based on bandwidth and timing requirements, applications may use any one of multiple intra-building RF networks 60,70,80 (FIG. 2) to exchange data between nodes inside the building or with information providers connected to the building via a WAN/MAN. A modular RF Access Unit (RFAU) 40 (FIG. 2) is where RF networks come together for connection to external public networks 30. Modules can be added to or removed from PNIU 20 and RFAU 40 to add or remove a wireless network or an interface to a WAN/MAN. Most security and user-access-control functions reside at the RFAU 40.

External network input 30 includes, but is not limited to, satellite broadcast data, broadcast television, cable television, hybrid FO co-axial data, external telephone systems, public utility systems, and wireless (e.g.. cellular) data systems. Internal network input 35 includes, but is not limited to, local area computer networks (LANs) and internal telephone systems. Each input, regardless of whether it is external 30 or internal 35, is fed to the PNIU 20, specifically to a network specific interface (NSI) 25 that is compatible with the input being supplied. For instance, external cable television input is paired with a network specific interface that is compatible with the cable television input. PNIU 20 is made to be adaptable to accommodate new network specific interfaces 25 as they are developed. Once the data has been received by the correct network specific interface 25 it is then routed to common data format converter 32. Common data format convener 32 converts the network specific data formats to a single common format usable by the WUBII.

For data exchange that is two-way, e.g., telephone, common data format converter 32 also converts the common data format back to the network specific format required for the specific application being used. This is true for all external or internal networks that support two-way communication.

The common formatted data is next passed to the RF access unit (RFAU) 40 where it is converted to the format appropriate for the desired application by the multiplexer/de-multiplexer data format and protocol adaption/conversion module 45. RF transceivers 50 then forward the data to one or more of the remote nodes of the wireless networks 60, 70, 80 depending on the bandwidth required for distribution to the waiting application or device.

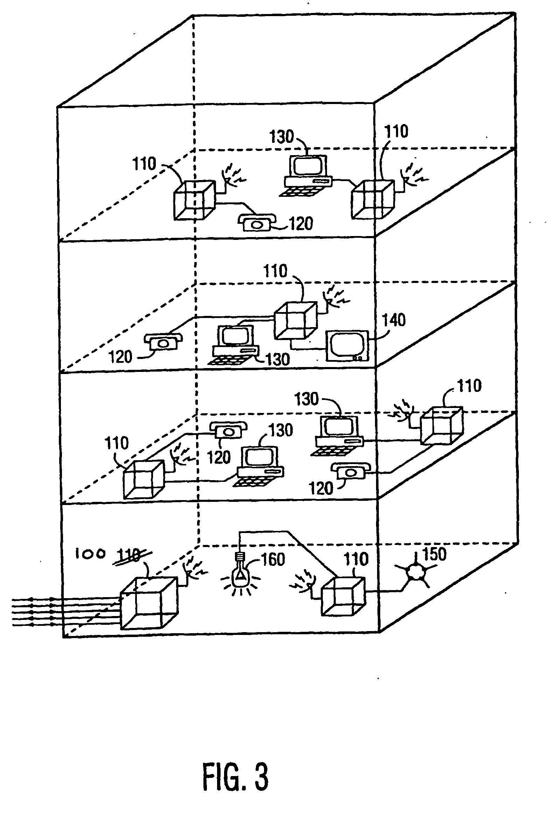

End user applications are divided into groups according to the amount of bandwidth required by the application. Audio and Control applications typically use low-bandwidth multi-hop wireless networks 70 that require cheap low-power transmitters. Higher bandwidth wireless networks 80 may be used by video and data-intensive applications. Through PNIU 20, the WUBII can connect phone networks and local area computer networks 35 to any of the RF wireless networks 60,70,80 in a building. FIG. 3 illustrates a hypothetical building configuration showing a combination PNIU/RFAU unit 100 located on the first floor of the building. PNIU/RFAU unit 100 may be located anywhere in the building but has been placed on the first floor for illustration purposes only. PNIU/RFAU is adapted to receive external input as previously described and, via the RFAU, convert the external data to a common format for distribution to the desired application over the internal wireless networks 110 situated throughout the building. Each wireless network 110 is capable of 2-way wireless communication with the PNIU/RFAU unit 100 which is centrally located somewhere in the building.

PNIU 20 and RFAU 40 adapt external network data to a common format such as baseband digital. After extraction of desired service information, often by demultiplexing of incoming TDM streams, RFAU 40 converts the common data format to a format appropriate for the specific wireless network 60,70,80 that will deliver data to a specific application at the requisite data rate. Protocols and media proprietary to a service delivery company or network operator can be adapted to open standards like MPEG, BISDN, RSA, etc., at a central point, e.g., PNIU/RFAU. High data-rate services using compressed audio and video are enabled via wireless networks 80 that use spread-spectrum and FDMA/CDMA communication schemes. By publishing RFAU 40 and PNIU 20 interface specifications, other vendors may then provide modules for use within the WUBII.

Each device networked into the WUBII operates at different communication rate under a different format. Hence, RF transceivers 50 (FIG. 2) are designed with these needs in mind. As the specifications and formats of the wireless networks 60,70,80 are published, any vendor can design communication nodes, and/or applications that use the nodes, and connect to a suitable wireless network 60,70,80 within the WUBII. Similarly, any network operator or external information provider can connect to the building at the PNIU 20 and deliver or receive information.

By providing a wireless link and a unified protocol these units can communicate among one another and allow one to be controlled by another without the user having to make explicit connections. Data exchange between computer and home appliances for example is possible with this scheme. Moreover, by sharing the bandwidth of the RF spectrum, the overall system will be cost effective. Having the communication link will allow the use of the control panel of one device for controlling another device thereby reducing cost and/or increasing flexibility.

By way of example, FIG. 3 illustrates telephones 120, computers 130, a television 140, a local area network (LAN) 150, and building lighting 160 all connected to one or more of the wireless networks (110) which, in turn, are connected to the PNIU/RFAU unit 100. FIG. 3 shows each device or application hardwired to the wireless networks 110 but this does not necessarily need to be the case. Each application or device may be wirelessly connected to one or more nodes of the wireless networks 110.

It is to be understood that the foregoing disclosure taught and described herein is illustrative of the present invention. Modifications may readily be devised by those ordinarily skilled in the art without departing from the scope of the appended claims.

## Claims

1. System for providing a building wide information infrastructure, the system comprising:
- a public network interface unit (20) for receiving and sending a plurality of network specific data formats through network specific inputs and outputs (30, 35), said public network interface unit (20) further being adapted to convert network specific input data input at said inputs into data having a single common data format usable by a wireless universal building information structure, and to convert said data having a common data format into output data output at said outputs having a required network specific data format;
- a radio frequency access unit (40) being adapted to receive said converted network specific input data and forwarding said converted network specific input data to one or more radio frequency wireless networks (60, 70, 80, 110), said radio frequency access unit (40) comprising:
- a means (45) for providing data format and protocol adaption and conversion of said data having a common data format to data having a format appropriate for said one or more radio frequency wireless networks (60, 70, 80, 110), and conversion of said data having a format appropriate for said one or more radio frequency wireless networks (60, 70, 80, 110) to said data having a common data format; and
- a plurality of radio frequency transceivers (50), one transceiver for each of said one or more radio frequency wireless networks (60, 70, 80, 110);
wherein said one or more radio frequency wireless networks (60, 70, 80, 110) are adapted to convey data to a plurality of end user applications or end user devices (120, 130, 140, 150, 160), or said end user applications or end user devices (120, 130, 140, 150, 160) convey data to said one or more radio frequency wireless networks (60, 70, 80, 110).

2. System of claim 1, wherein said radio frequency access unit (40) comprises a means (45) for multiplexing and demultiplexing said data having a common data format.

3. System of claim 1, wherein said network specific inputs and outputs (30, 35) are connected to satellite networks (30), broadcast television networks (30), cable television networks (30), co-axial networks (30), telephone networks (30), utility company networks (30), cellular networks (30), wireless networks (30), local area computer networks (35), wide area computer networks (35), and metropolitan area computer networks (35).

4. System of claim 3, wherein said radio frequency wireless networks (60, 70, 80) comprise low bandwidth wireless networks (60), multi-hop wireless networks (70), and high bandwidth wireless networks (80).

5. System of claim 1, wherein said data having a common data format form a baseband signal.

6. System of claim 1, wherein said public network interface unit (20) comprises a plurality of inputs being adapted to be connected with a plurality of internal or external networks (30, 35), wherein each input is provided with a respective external network specific interface (25) being adapted for communication with the external network (30) in accordance with a respective external network's proprietary data format.

7. Method for exchanging data in a building among devices and applications utilizing differing data formats and protocols, the method comprising:
receiving network specific data from an external network (30, 35);
converting the received network specific data into data having a single common data format usable by a wireless universal building information structure;
converting said data having a common data format into data having an application specific or device specific format;
relaying the converted data via a network of wireless transceivers (50) to an application or device (120, 130, 140, 150, 160);
sending, from an application or device (120, 130, 140, 150, 160), data via said network of wireless transceivers (50);
converting the sent data having an application specific or device specific format into data having a common data format;
converting the sent data having a common data format into data having a required network specific format for transmission to an external network (30, 35).

8. Method of claim 7, wherein an initiation of a data exchange occurs from either said external network (30, 35) or from said application or device (120, 130, 140, 150, 160).

9. Method of claim 7, wherein said data having a common data format are multiplexed and demultiplexed.

## Patentansprüche

1. System, um eine gebäudeweite Informationsinfrastruktur vorzusehen, wobei das System aufweist:
- eine Schnittstelleneinheit (20) zum Anschluss an das öffentliche Netz, um mehrere netzspezifische Datenformate über netzspezifische Eingänge und Ausgänge (30, 35) zu empfangen und zu übertragen, wobei die Schnittstelleneinheit (20) zum Anschluss an das öffentliche Netz weiterhin an den Eingängen netzspezifische Eingangsdateneingaben in Daten mit einem einzigen, gemeinsamen Datenformat, welches von einer drahtlosen, universellen Informationsinfrastruktur für Gebäude genutzt werden kann, umwandeln und die Daten mit einem gemeinsamen Datenformat an den Ausgängen in Ausgangsdatenausgaben mit einem erforderlichen, netzspezifischen Datenformat umwandeln kann,
- eine Radiofrequenz-Zugriffseinheit (40), welche die umgewandelten, netzspezifischen Eingangsdaten empfangen und die umgewandelten, netzspezifischen Eingangsdaten einem oder mehreren drahtlosen Radiofrequenznetzen (60, 70, 80, 110) übermitteln kann, wobei die Radiofrequenz-Zugriffseinheit (40) aufweist:
- Mittel (45), um Datenformat und Protokolladaption sowie eine Umwandlung der Daten mit einem gemeinsamen Datenformat in Daten mit einem, für das eine oder die mehreren drahtlosen Radiofrequenznetze (60, 70, 80, 110) geeigneten Format sowie eine Umwandlung der Daten mit einem, für das eine oder die mehreren drahtlosen Radiofrequenznetze (60, 70, 80, 110) geeigneten Format in Daten mit einem gemeinsamen Datenformat vorzusehen, sowie
- mehrere Radiofrequenz-Transceiver (50), einen Transceiver für jedes der einen oder mehreren drahtlosen Radiofrequenznetze (60, 70, 80, 110),
wobei das eine oder die mehreren drahtlosen Radiofrequenznetze (60, 70, 80, 110) Daten mehreren Endbenutzeranwendungen oder Endbenutzer-Geräten (120, 130, 140, 150, 160) zuführen oder die Endbenutzeranwendungen oder Endbenutzer-Geräte (120, 130, 140, 150, 160) Daten dem einen oder mehreren drahtlosen Radiofrequenznetzen (60, 70, 80, 110) zuführen können.

2. System nach Anspruch 1, wobei die Radiofrequenz-Zugriffseinheit (40) Mittel (45) aufweist, um die Daten mit einem gemeinsamen Datenformat zu multiplexieren und zu demultiplexieren.

3. System nach Anspruch 1, wobei die netzspezifischen Eingänge und Ausgänge (30, 35) an Satellitennetze (30), Rundfunk-Fernsehleitungsnetze (30), Kabelfemsehnetze (30), Koaxialnetze (30), Fernsprechnetze (30), Netze (30) von Versorgungsunternehmen, Zellularnetze (30), drahtlose Netze (30), lokale Computemetze (35), Weitverkehrs-Computemetze (35) sowie Großstadt-Computernetze (35) angeschlossen sind.

4. System nach Anspruch 3, wobei die drahtlosen Radiofrequenznetze (60, 70, 80) drahtlose Netze (60) mit geringer Bandbreite, drahtlose Mehrsprungnetze (70) sowie drahtlose, breitbandige Netze (80) aufweisen.

5. System nach Anspruch 1, wobei die Daten mit einem gemeinsamen Datenformat ein Basisbandsignal erzeugen.

6. System nach Anspruch 1, wobei die Schnittstelleneinheit (20) zum Anschluss an das öffentliche Netz mehrere Eingänge aufweist, welche mit mehreren internen und externen Netzen (30, 35) verbunden werden können, wobei jeder Eingang mit einer jeweiligen, für das externe Netz spezifischen Schnittstelle (25) versehen ist, welche zur Kommunikation mit dem externen Netz (30) entsprechend einem jeweiligen, herstellerspezifischen, externen Datenformat ausgelegt ist.

7. Verfahren zum Austausch von Daten unter Geräten und Anwendungen in einem Gebäude unter Einsatz von unterschiedlichen Datenformaten und Protokollen, wonach:
- netzspezifische Daten von einem externen Netz (30, 35) empfangen werden,
- die empfangenen, netzspezifischen Daten in Daten mit einem einzigen, gemeinsamen, von einer drahtlosen, universellen Informationsinfrastruktur für Gebäude verwendbaren Datenformat umgewandelt werden,
- die Daten mit einem gemeinsamen Datenformat in Daten mit einem anwendungsspezifischen oder gerätespezifischen Format umgewandelt werden,
- die umgewandelten Daten über ein Netz aus drahtlosen Transceivern (50) an eine Anwendung oder ein Gerät (120, 130, 140, 150, 160) weitergeleitet werden,
- Daten von einer Anwendung oder einem Gerät (120, 130, 140, 150, 160) über das Netz aus drahtlosen Transceivern (50) übertragen werden,
- die übertragenen Daten mit einem anwendungsspezifischen oder gerätespezifischen Format in Daten mit einem gemeinsamen Datenformat umgewandelt werden,
- die übertragenen Daten mit einem gemeinsamen Datenformat in Daten mit einem erforderlichen, netzspezifischen Format zur Übertragung zu einem externen Netz (30, 35) umgewandelt werden.

8. Verfahren nach Anspruch 7, wonach eine Auslösung eines Datenaustauschs von dem externen Netz (30, 35) oder von der Anwendung oder dem Gerät (120, 130, 140, 150, 160) aus erfolgt.

9. Verfahren nach Anspruch 7, wonach die Daten mit einem gemeinsamen Datenformat multiplexiert und demultiplexiert werden.

## Revendications

1. Système pour établir une large infrastructure d'informations pour immeuble, le système comprenant :
- une unité d'interface de réseau public (20) pour recevoir et transmettre une pluralité de formats de données spécifiques au réseau par le biais d'entrées et sorties spécifiques au réseau (30, 35), ladite unité d'interface au réseau public (20) étant par ailleurs destinée à convertir une entrée de données d'entrée spécifique au réseau à hauteur desdites entrées en données possédant un format de données commun unique utilisable par une structure d'information universelle sans fil pour immeuble et à convertir lesdites données ayant un format de données commun en sorties de données de sortie à hauteur desdites sorties ayant un format de données spécifique au réseau requis;
- une unité d'accès à radiofréquences (40) étant destinée à recevoir lesdites données d'entrée spécifiques au réseau converties et transférant lesdites données d'entrées spécifiques au réseau converties en un ou plusieurs réseaux sans fil à radiofréquences (60, 70, 80, 110), ladite unité d'accès à radiofréquences (40) comprenant :
- des moyens (45) pour fournir une adaptation du protocole et du format de données et une conversion desdites données ayant un format de données commun en données ayant un format approprié pour lesdits un ou plusieurs réseaux sans fil à radiofréquences (60, 70, 80, 110) et la conversion desdites données ayant un format adéquat pour lesdits un ou plusieurs réseaux sans fil à radiofréquences (60, 70, 80, 110) en lesdites données ayant un format de données commun; et
- une pluralité d'émetteurs-récepteurs à radiofréquences (50), un émetteur-récepteur pour chacun desdites un ou plusieurs réseaux sans fil à radiofréquences (60, 70, 80, 110);
- dans lequel lesdits un ou plusieurs réseaux sans fil à radiofréquences (60, 70, 80, 110) sont destinés à véhiculer des données vers une pluralité d'applications ou de dispositifs pour l'utilisateur final (120, 130, 140, 150, 160) ou lesdits applications ou dispositifs pour l'utilisateur final (120, 130, 140, 150, 160) véhiculent des données vers lesdits un ou plusieurs réseaux sans fil à radiofréquences (60, 70, 80, 110).

2. Système suivant la revendication 1, dans lequel ladite unité d'accès à radiofréquences (40) comprend des moyens (45) pour multiplexer et démultiplexer lesdites données possédant un format de données commun.

3. Système suivant la revendication 1, dans lequel lesdites entrées et sorties (30, 35) spécifiques au réseau sont raccordées à des réseaux par satellite (30), des réseaux de télévision diffusée (30), des réseaux de télévision câblés (30), des réseaux coaxiaux (30), des réseaux de téléphonie (30), des réseaux de sociétés distributrices de fournitures (30), des réseaux cellulaires (30), des réseaux sans fil (30), des réseaux informatiques locaux (35), des réseaux grande distance (35) et des réseaux informatiques métropolitains (35).

4. Système suivant la revendication 3, dans lequel lesdites réseaux sans fil à radiofréquences (60, 70, 80) comprennent des réseaux sans fil à faible largeur de bande (60), des réseaux sans fil à plusieurs bonds (70) et des réseaux sans fil à largeur de bande élevée (80).

5. Système suivant la revendication 1, dans lequel lesdites données possédant un format de données commun forment un signal en bande de base.

6. Système suivant la revendication 1, dans lequel ladite unité d'interface au réseau public (20) comprend une pluralité d'entrées destinées à être connectées à une pluralité de réseaux internes ou externes (30, 35), dans lequel chaque entrée est dotée d'une interface respective, spécifique au réseau externe (25) destinée à une communication avec le réseau externe (30) conformément à un format de données propriétaire du réseau externe respectif.

7. Procédé d'échange de données dans un immeuble entre dispositifs et applications utilisant différents formats et protocoles de données, le procédé comprenant :
- la réception de données spécifiques au réseau à partir d'un réseau externe (30, 35);
- la conversion des données spécifiques au réseau reçues en données ayant un format de données commun unique utilisable par une structure d'information universelle sans fil pour immeuble;
- la conversion desdites données ayant un format de données commun en données possédant un format spécifique à l'application ou spécifique au dispositif;
- le relais des données converties par l'intermédiaire d'un réseau d'émetteurs-récepteurs sans fil (50) à une application ou un dispositif (120, 130, 140, 150, 160);
- la transmission, à partir d'une application ou d'un dispositif (120, 130, 140, 150, 160) de données par le biais dudit réseau d'émetteurs-récepteurs sans fil (50);
- la conversion des données transmises possédant un format spécifique à l'application ou spécifique au dispositif en données possédant un format de données commun;
- la conversion des données transmises possédant un format de données commun en données ayant un format spécifique au réseau requis pour la transmission vers un réseau externe (30, 35).

8. Procédé suivant la revendication 7, dans lequel une initiation d'un échange de données se produit à partir dudit réseau externe (30, 35) ou de ladite application ou dudit dispositif (120, 130, 140, 150, 160).

9. Procédé suivant la revendication 7, dans lequel lesdites données possédant un format de données commun sont multiplexées et démultiplexées.
